# EUROPEAN PATENT SPECIFICATION

(11) **EP 3 401 287 B1**
(45) Date of publication and mention of the grant of the patent: **28.10.2020**
(21) Application number: 16874540.4
(22) Date of filing: 16.08.2016
(51) Int. Cl.: C03C 27/08, E06B 3/673, E06B 3/677, E06B 3/66, B23K 1/00, B23K 1/002, B23K 1/005, B23K 3/08, B23K 103/00

(54) **METHOD FOR MANUFACTURING TEMPERED VACUUM GLASS**
VERFAHREN ZUR HERSTELLUNG VON GEHÄRTETEM VAKUUMGLAS
PROCÉDÉ DE FABRICATION DE VERRE SOUS VIDE TREMPÉ

(30) Priority: 15.12.2015 CN 201510940006
(43) Date of publication of application: 14.11.2018
(73) Proprietor: Luoyang Landglass Technology Co., Ltd., Henan 471000 (CN)
(72) Inventor: ZHAO, Yan, Luoyang Henan 471000 (CN)
(74) Representative: Grünecker Patent- und Rechtsanwälte PartG mbB
(86) International application number: PCT/CN2016/095523
(87) International publication number: WO 2017/101480

(56) References cited:
- EP-A1- 2 653 454
- CN-A- 102 241 473
- CN-A- 104 743 922
- CN-U- 204 058 255
- KR-A- 20100 032 139
- US-A1- 2013 291 599
- US-B1- 7 204 102
- US-B2- 8 944 308

## Description

### BACKGROUND

### Technical Field

The present invention belongs to the field of vacuum glass manufacturing, and particularly relates to a method for manufacturing tempered vacuum glass and a tempered vacuum glass production line based on the manufacturing method.

### Related Art

Due to the excellent thermal insulation, sound insulation and energy saving effects, vacuum glass represents the development direction of the next generation of energy-saving architectural glass, and it has been widely promoted and applied. The earliest research on vacuum glass originated in the 1990s. For example, the Australian patent application No. AU94192667.2 discloses a method for manufacturing vacuum glass, which pioneered the research of vacuum glass. Subsequently, some research was conducted domestically and abroad on this technology. However, due to technological reasons, the manufactured vacuum glass is non-tempered vacuum glass and does not meet the standards for architectural safety glass, which greatly hinders the application of vacuum glass in high-rise buildings and in some special occasions. How to manufacture tempered vacuum glass has become the focus of competing research at home and abroad. In response to this, the applicant proposed a glass plate composite sealing method in Chinese Patent No. 201010508421.7. The method utilizes a low-melting-point metal to seal the periphery of the vacuum glass, and successfully solves the worldwide problem that other sealing processes can easily cause the de-tempering of the tempered glass substrate, thereby realizing the manufacturing of the tempered vacuum glass, and promoting the progressive development and wide application of vacuum glass.

US 8,944,308 B2 relates to a method for producing vacuum glass, whereby metal foils extending beyond the edge of glass plates are firstly soldered or attached to the edge portion of the glass plates, secondly superposed and welded with each other using e.g. laser welding within a vacuum chamber outside of the glass plate's region and finally bent towards the glass plates.

US 2013/0291599 A1 discloses a device for continuously processing a vacuum glass member. The glass plates may comprise pre-plated metal layers with solder and are sealed using e.g. a laser welding within a vacuum chamber. The whole sealing process of the vacuum glass is performed at normal temperature, which is considered as one of the major advantages in this document.

US 7,204,102 B1 discloses a method for manufacturing tempered vacuum glass, wherein indium or indium alloy are used as a soldering material with a melting temperature of e.g. 157°C. The combined glass plates are heated uniformly at a temperature of or below 220°C to form a seal.

When manufacturing the tempered vacuum glass, the basic sealing strength of two glass plates is an important performance parameter of the tempered vacuum glass. Continuously breaking through the barriers of the prior art, providing more complete solutions, and promoting the development of the tempered vacuum glass industry are the goals pursued by those skilled in the art. Therefore, how to improve the sealing strength has become a constant search target by those skilled in the art.

### SUMMARY

In practical application, the applicant has found that the stress is generated after cooling and solidification due to the difference in the expansion coefficients of the solder and the metalized layer at the time of sealing. In view of the problems in the prior art, the first object of the present invention is to provide a method for manufacturing a tempered vacuum glass, which is suitable for manufacturing tempered vacuum glass without any air extraction opening. The manufacturing method not only reduces the stress between two glass substrates during sealing, but also has a high air exhausting efficiency and effect in the temperature range, thereby manufacturing vacuum glass with a high vacuum degree and extending the service life of the vacuum glass; and the second object of the present invention is to provide a continuous automatic production line of tempered vacuum glass, which provides equipment guarantee for mass production.

In order to achieve the above objects, the present invention discloses a method for manufacturing tempered vacuum glass according to claim 1. The manufacturing method comprises the following steps:
(1) preparing a metalized layer in a to-be-sealed region on the glass substrate, and tempering or heat-reinforcing the glass substrates;
(2) placing a metal solder on the metalized layer;
(3) preheating and superposing the glass substrates, by one of the following methods:
   a. respectively heating the two glass substrates to 60°C to 230°C, disposing the metalized layers of the to-be-sealed regions of the two glass substrates opposite to each other, and superposing the glass substrates such that the metal solder is located between the metalized layers of the to-be-sealed regions; and
   b. disposing the metalized layers of the to-be-sealed regions of the two glass substrates opposite to each other, superposing the glass substrates such that the metal solder is located between the metalized layers of the to-be-sealed regions, and integrally heating the two superposed glass substrates to 60°C to 230°C;
(4) in a vacuum chamber, continuing heating a tempered glass assembly in a vacuum chamber to keep the tempered glass assembly in the heating temperature range of step (3), and vacuumizing the vacuum chamber to a predetermined vacuum degree; and
(5) hermetically sealing the metalized layers in the vacuum chamber by a metal brazing process to complete the manufacturing process of the vacuum glass, wherein the metal brazing process is adopted to perform local heating on the to-be-sealed region, wherein the heating mode is laser heating, flame heating, current heating, induction heating, microwave heating, radiation heating or convection heating.

Further, the heating temperature in step (3) is 80°C to 180°C.

Further, when the glass substrate is a coated glass substrate, a film in the to-be-sealed region of the coated glass substrate is removed before the metalized layer is preformed.

Further, in step (1), a step of preparing a support for supporting an inner cavity is further included: firstly, a paste-like glass glaze is printed on predetermined positions on one of the glass substrates to form a dot-like bulge array; and then, the glass glaze is sintered, by a high-temperature sintering process, into the support that is consolidated with the glass substrate.

Further, a step of placing the support before the two glass substrates are superposed is further included: the solid support is placed in a predetermined position on one of the glass substrates.

Further, in step (5), a spacer is disposed between the two glass substrates, so that a gap for exhausting gas is left between the superposed glass substrates; and after the vacuum chamber reaches a predetermined vacuum degree, the spacer is removed.

Further, before step (3), a getter is placed on at least one of the glass substrates, and the getter is activated after step (4) is completed.

Disclosed therein is a tempered vacuum glass production line based on the above preparation method, the production line comprising a metalized layer preparation device, a solder placement device, a superposing device, a first preheater, a vacuumizing system and a soldering edge sealing device which are sequentially connected through a first conveyor; wherein the vacuumizing system comprises multiple vacuum chambers with an air extractor which are sequentially connected along the glass conveying direction, a second preheater and the soldering edge sealing device are disposed in the vacuum chamber, and the first preheater and the second preheater heat the tempered glass assembly to 60°C to 230°C.

Further, the vacuum chamber comprises a front-end auxiliary vacuum chamber disposed on the first conveyor and a main vacuum chamber located on one side of the first conveyor, a vacuum valve being disposed between the front-end auxiliary vacuum chamber and the main vacuum chamber; and the second preheater and the soldering edge sealing device are located in the main vacuum chamber.

Further, when one vacuum chamber is provided, the downstream side of the front-end auxiliary vacuum chamber is connected with a rear-end auxiliary vacuum chamber; and when multiple vacuum chambers are provided, the downstream side of the last front-end auxiliary vacuum chamber is connected with the rear-end auxiliary vacuum chamber.

Further, the superposing device comprises a lifting mechanism disposed on one side of the first conveyor, the lifting mechanism being provided with a lifting arm, the lifting arm being provided with a turnover mechanism, and a vacuum suction cup or clamping device being disposed in the turnover mechanism; and when the superposing device is in operation, the vacuum suction cup or clamping device captures a second glass substrate, and the lifting mechanism lifts the second glass substrate to a predetermined height, turns it over, and places it on a first glass substrate after the turnover to complete the superposing.

Further, a side surface of the first conveyor is provided with a second conveyor, the first conveyor being used for conveying the first glass substrate, and the second conveyor being used for conveying the second glass substrate.

Further, the superposing device comprises a rotating shaft disposed between the first and second conveyors, and a swing arm connected with the rotating shaft and inserted under the second glass substrate along a gap of the second conveyor, the swing arm being provided with a vacuum suction cup or clamping device; and in operation, the vacuum suction cup or clamping device captures the second glass substrate, turns over the swing arm around the rotating shaft, and places the second glass substrate on the first glass substrate on the first conveyor to complete the superposing.

Further, the superposing device comprises a suspended transmission device, the suspended transmission device being used for conveying the second glass substrate, the suspended transmission device comprising a conveying mechanism, and the conveying mechanism being provided with a lifting device with a vacuum suction cup or clamping device; and in operation, the lifting device descends, the vacuum suction cup or clamping device captures and fixes the second glass substrate on the first conveyor, the lifting device ascends, the second glass substrate is conveyed to above the first glass substrate to be superposed, and the second glass substrate is placed on the first glass substrate to complete the superposing.

Further, the superposing device comprises a multi-degree-of-freedom mechanical arm disposed on one side of the first conveyor, the mechanical arm being provided with a vacuum suction cup or clamping device; and when the superposing device is in operation, the vacuum suction cup or clamping device captures the second glass substrate, and the second glass substrate is turned over and placed on the first glass substrate to complete the superposing.

Further, the production line is further provided with a support placement device, the support placement device being disposed at a station between the metalized layer preparation device and the soldering edge sealing device.

Further, the production line is further provided with a support placement device, the support placement device being disposed at a station between the solder placement device and the superposing device.

Further, the production line further comprises a support preparation device disposed between the metalized layer preparation device and the solder placement device, the support preparation device comprising a screen printing device, a drying device and a sintering device.

Further, when the glass substrate is a coated glass substrate, a film removing device for removing the film in the to-be-sealed region of the coated glass substrate is further included.

Further, the soldering edge sealing device is a laser heating device, microwave heating device, flame heating device, induction heating device or convection heating device.

Further, the production line further comprises a glass tempering device, the glass tempering device being disposed at a station between the metalized layer preparation device and the solder placement device.

Further, the metalized layer preparation device comprises a screen printing device, a drying device and a sintering device.

Further, the production line further comprises a getter activation device disposed in the vacuum chamber.

Further, when multiple vacuum chambers are provided, the vacuum chambers are sequentially connected along the glass conveying direction.

Further, the vacuum chamber comprises a front-end auxiliary vacuum chamber, a main vacuum chamber and a rear-end auxiliary vacuum chamber which are sequentially connected along the glass conveying direction; and the second preheater and the soldering edge sealing device are located in the main vacuum chamber.

A method for manufacturing a tempered vacuum glass according to the present invention is suitable for manufacturing tempered vacuum glass without any air extraction opening. By heating the glass substrates to 60°C to 230°C before sealing, the manufacturing method not only reduces the stress between two glass substrates during sealing, but also has a high air exhausting efficiency and effect in the temperature range, thereby manufacturing vacuum glass with a high vacuum degree and extending the service life of the vacuum glass. In addition, disclosed therein is a tempered vacuum glass production line based on the manufacturing method.

### BRIEF DESCRIPTION OF THE DRAWINGS

FIG. 1 is a schematic diagram of a production line;
FIG. 2 is a schematic diagram of a production line;
FIG. 3 is a schematic diagram of a production line;
FIG. 4 is a schematic diagram of a production line;
FIG. 5 is a schematic diagram of a production line;
FIG. 6 is a superposing schematic diagram of a superposing device 3 in FIG. 5;
FIG. 7 is a schematic diagram of a production line;
FIG. 8 is a superposing schematic diagram of a superposing device 3 in FIG. 7;
FIG. 9 is a schematic diagram of a metalized layer preparation device 1; and
FIG. 11 is a schematic diagram of a support preparation device 8.

### DETAILED DESCRIPTION

The specific embodiments of the present invention will be described in detail below with reference to the accompanying drawings.

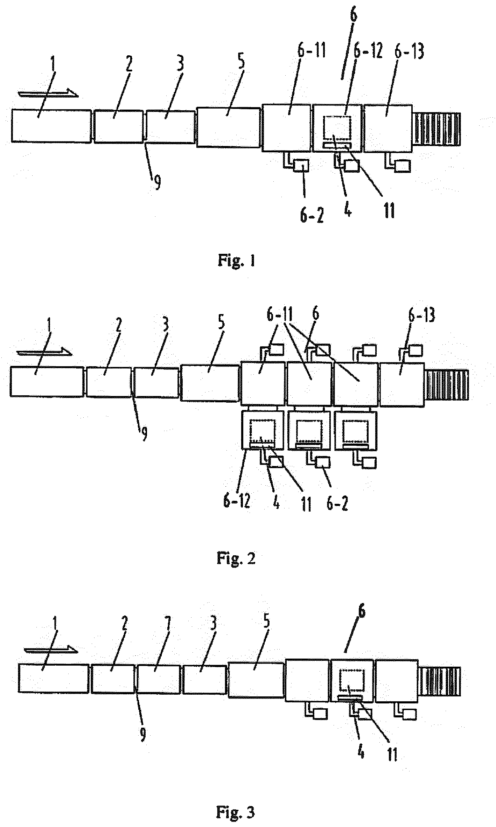

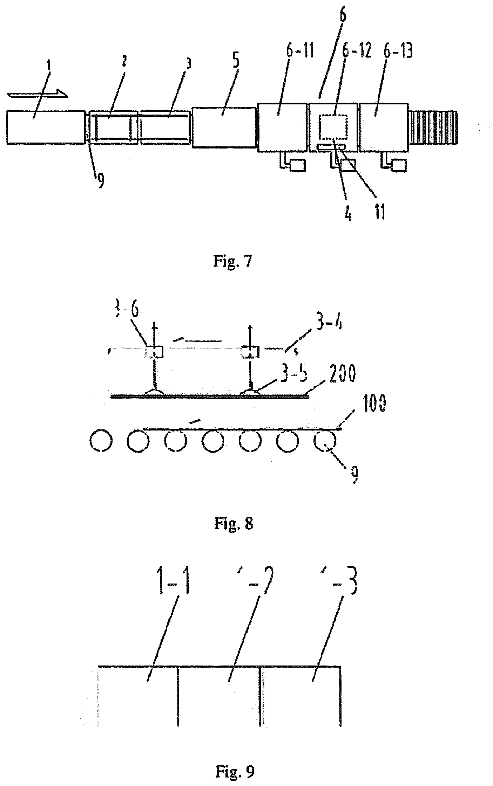

FIG. 1 and FIG. 9 show a tempered vacuum glass production line. In the present embodiment, the production line specifically comprises a first conveyor 9, such as a conveying roller bed, and a metalized layer preparation device 1, a solder placement device 2, a superposing device 3, a first preheater 5 and a vacuumizing system 6 which are sequentially connected through the first conveyor 9; wherein the vacuumizing system 6 comprises multiple vacuum chambers with an air extractor 6-2 which are sequentially connected along the glass conveying direction, a second preheater 11 and the soldering edge sealing device 4 are disposed in the vacuum chamber, and the first preheater 5 and the second preheater 11 heat the tempered glass assembly to 60°C to 230°C. The vacuum chamber comprises a front-end auxiliary vacuum chamber 6-11, a main vacuum chamber 6-12 and a rear-end auxiliary vacuum chamber 6-13 which are sequentially connected along the glass conveying direction; and the second preheater 11 and the soldering edge sealing device 4 are located in the main vacuum chamber 6-12. Vacuum valves are disposed on inlet ends and outlet ends of the front-end auxiliary vacuum chamber 6-11, the main vacuum chamber 6-12 and the rear-end auxiliary vacuum chamber 6-13, and a getter activation device is also disposed in the main vacuum chamber 6-12.

The metalized layer preparation device 1 comprises a screen printing device 1-1, a drying device 1-2 and a sintering device 1-3. The drying device 1-2 and the sintering device 1-3 are an integrated device. The sintering device 1-3 is a glass tempering device.

The first preheater 5 is a radiation-type glass plate heating furnace or a convection-type glass plate heating furnace.

The tempered vacuum glass comprises two glass substrates. The method for manufacturing tempered vacuum glass specifically comprises the following steps:
(1) The periphery of the glass substrate is a band-shaped to-be-sealed region, the metalized layer preparation device 1 is utilized to prepare a metalized layer in the to-be-sealed region, and the glass substrate is tempered or heat-reinforced; and the detailed steps for preparing the metalized layer have been disclosed in the applicant's earlier patent application and will not be described here.
(2) A metal solder is placed on the metalized layer by using the solder placement device 2.
(3) The glass substrates are preheated and superposed, by one of the following methods:
   a. firstly, the two glass substrates are respectively heated to 60°C to 230°C by the first preheater 5; then the metalized layers of the two glass substrates are disposed opposite to each other by the superposing device 3, and the glass substrates are superposed such that the metal solder is located between the metalized layers; for the superposing device 3, references are made to Chinese Patent No.201420110435.7, the superposing device mainly comprises a lifting mechanism, such as a sprocket lifting mechanism, a servo piston cylinder lifting mechanism or the like, disposed on one side of the conveyor, the lifting mechanism is provided with a lifting arm inserted under the upper glass substrate along the roller gap, the lifting arm is provided with a turnover mechanism, and a vacuum suction cup is disposed in the turnover mechanism; in operation, the vacuum suction cup captures the passing upper glass substrate, and the lifting mechanism lifts the upper glass substrate to a predetermined height, turns it over, and places it on the passing lower glass substrate to complete the superposing; and
   b. firstly, the metalized layers of the two glass substrates are disposed opposite to each other by the superposing device 3, and the glass substrates are superposed such that the metal solder is located between the metalized layers; secondly, the two superposed glass substrates are integrally heated to 60°C to 230°C by the first preheater 5;
(4) In a vacuum chamber, the tempered glass assembly is continuously heated in a vacuum chamber to keep the tempered glass assembly in the heating temperature range of step (3), and the vacuum chamber is vacuumized to a predetermined vacuum degree, such as 10² to 10⁴ Pa; wherein during the vacuumizing, an ultraviolet light cleaner or plasma bombarding device is utilized to act on the tempered glass assembly so as to decompose residual impurities in the inner cavity, and volatile gas generated after decomposition is extracted out of the inner cavity.
(5) In the main vacuum chamber 6-12, the metal solder is heated by using a soldering edge sealing device 4 by a metal brazing process such that it is melted and solidified, and the metalized layers of the two glass substrates are hermetically sealed to complete the manufacturing process of the vacuum glass. When the metal brazing process is adopted to perform local heating on the to-be-sealed region, the heating mode is laser heating, flame heating, current heating, induction heating, microwave heating, radiation heating or convection heating. The soldering edge sealing device 4 is a laser heating device, microwave heating device, flame heating device, induction heating device or convection heating device.

According to the manufacturing method of the present invention, the glass substrates are heated to 60°C to 230°C before the tempered glass assembly enters the vacuum chamber and the temperature is kept after the tempered glass assembly enters the vacuum chamber, which is an important process parameter obtained by the applicant in combination with a large amount of experimental data in the process of continuously improving the tempered vacuum glass manufacturing process. Wherein heating the glass substrates before entering the vacuum chamber can greatly reduce the heating time after the glass substrates enter the vacuum chamber since the heating efficiency in an atmospheric environment is higher than that in a vacuum environment. Keeping the above-mentioned temperature in the exhausting process after entering the vacuum chamber can enhance the exhausting efficiency and effect, thereby enhancing the production efficiency and end product quality of the vacuum glass and extending the service life of the vacuum glass. The following tables reveal the influence of different heating temperatures on the exhausting efficiency and exhausting effect.

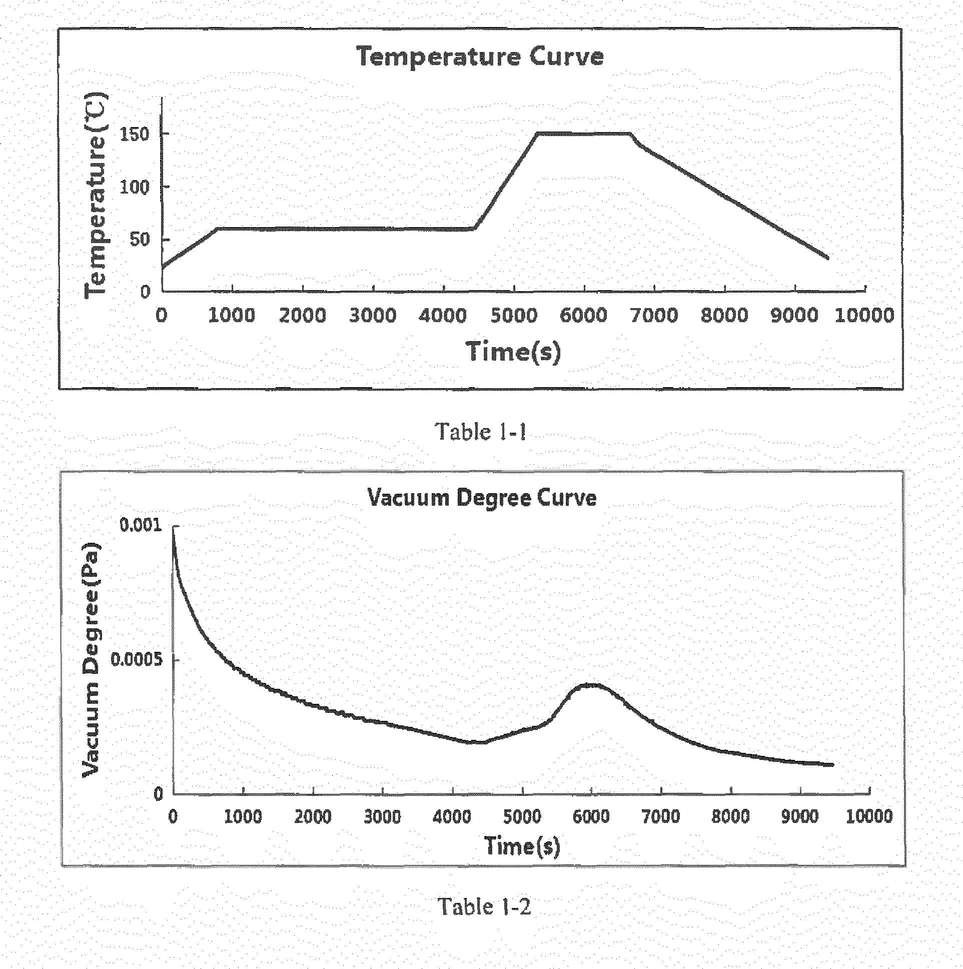

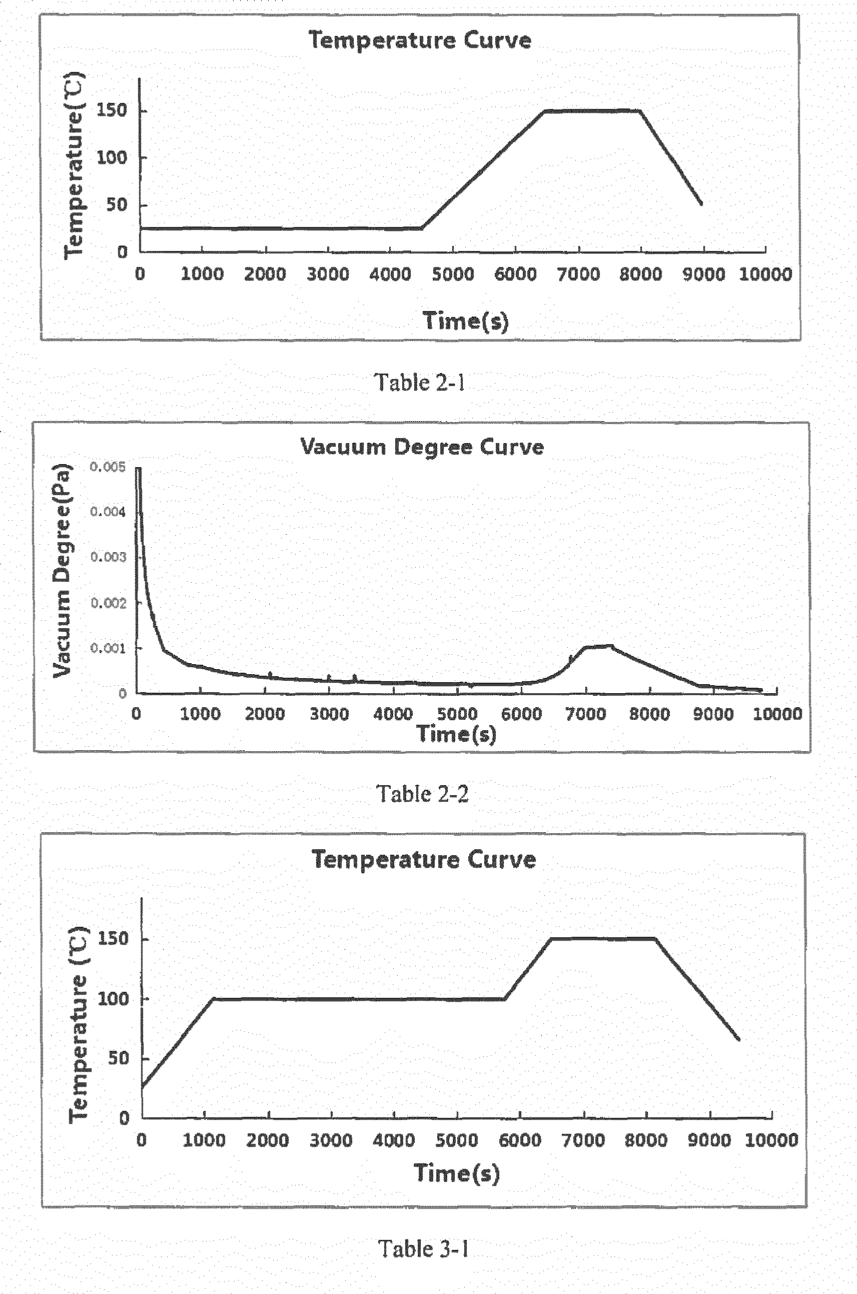

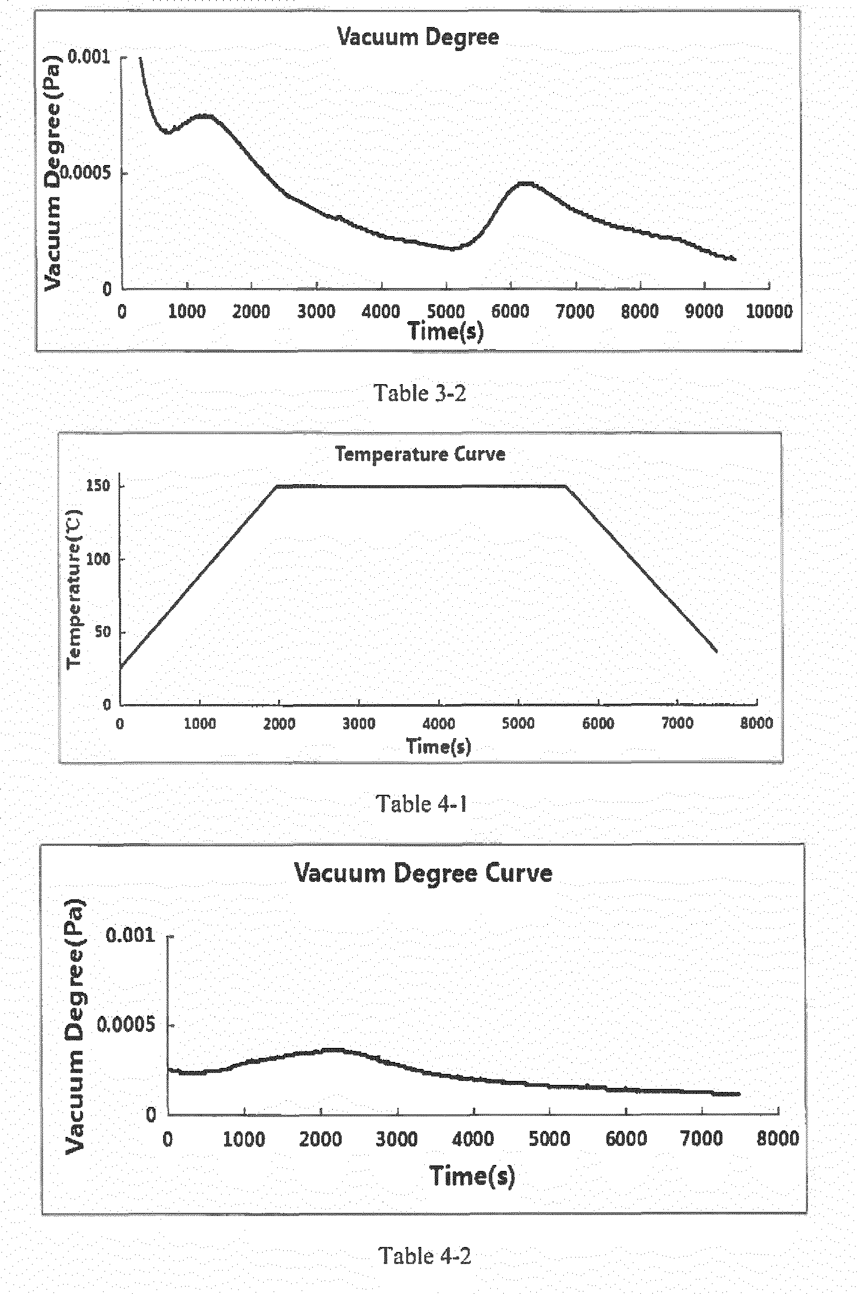

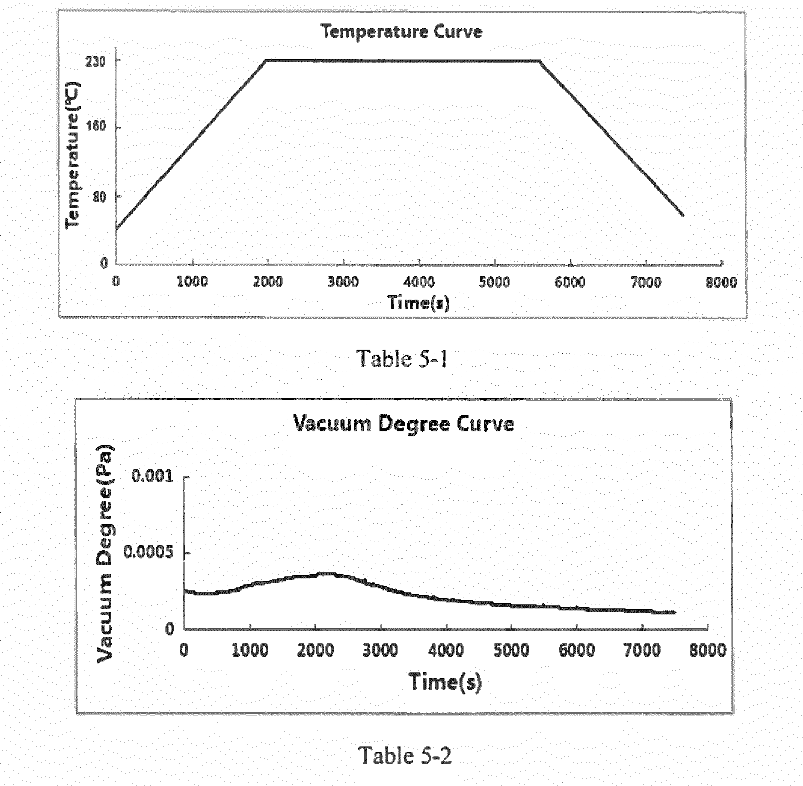

From the above curves, it can be seen that as the heating temperature increases, the vacuum degree continues to increase, and the exhausting efficiency increases; when the temperature rises to 150°C or so, the vacuum degree suddenly decreases, indicating a peak value of exhausting; and when the temperature is still kept at 150°C, the vacuum degree quickly increases, and after a period of time, the vacuum degree reaches a predetermined value and becomes stable, thereby obtaining the tempered vacuum glass with high vacuum degree and stable properties. However, since a lead-free metal solder has a higher melting point (230°C or so), the heating temperature can be increased to 230°C. Preferably, the glass substrates are heated to 80°C to 180°C, so that the exhausting efficiency can be enhanced without influencing the subsequent sealing process.

When the glass substrate is a coated glass substrate, the film in the to-be-sealed region of the coated glass substrate is removed before the metalized layer is preformed. During film removal, the production line further comprises a film removing device, and the film removing device may also be separated from the production line and used as a pretreatment process before entering the production line.

Before step (3), a getter is placed on at least one of the glass substrates, and the getter is activated after step (4) is completed.

FIG. 2 shows a tempered glass production line. In the present embodiment, the structure is basically the same as that of Figure 1, except that the production line is provided with multiple vacuum chambers at the same time, the vacuum chamber comprises a front-end auxiliary vacuum chamber 6-11 disposed on the first conveyor 9 and a main vacuum chamber 6-12 located on one side of the first conveyor 9, and a vacuum valve is disposed between the front-end auxiliary vacuum chamber 6-11 and the main vacuum chamber 6-12; the second preheater 11 and the soldering edge sealing device 4 are located in the main vacuum chamber 6-12, and the downstream side of the last front-end auxiliary vacuum chamber 6-11 is connected with a rear-end auxiliary vacuum chamber 6-13.

FIG. 3 shows a tempered glass production line. In the present embodiment, the structure is basically the same as that of Figure 1, except that a support placement device 7 is disposed at a station between the solder placement device 2 and the superposing device 3 and used for placing a preformed middle support onto the glass substrate. Of course, the support placement device 7 may also be disposed at a station between the metalized layer preparation device 1 and the solder placement device 2.

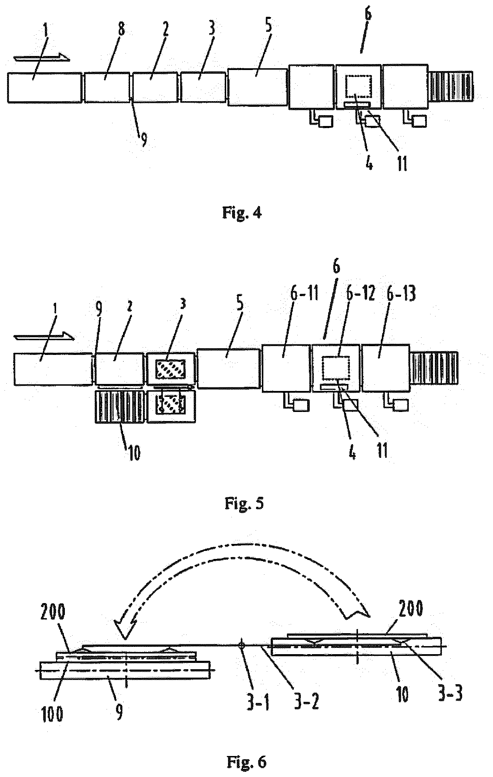

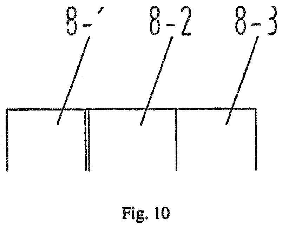

FIG. 4 and FIG. 10 show a tempered glass production line. In the present embodiment, the structure is basically the same as that of Figure 1, except that a support preparation device 8 is disposed between the metalized layer preparation device 1 and the solder placement device 2. The support preparation device 8 comprises a screen printing device 8-1, a drying device 8-2 and a sintering device 8-3, wherein the drying device 8-2 and the sintering device 8-3 are an integrated device, and the sintering device 8-3 is a glass tempering device. The steps of preparing the middle support by the support preparation device 8 include: firstly, a paste-like glass glaze is printed on predetermined positions on one of the glass substrates to form a dot-like bulge array by using the screen printing device 8-1; and then, the glass glaze is sintered, by using the drying device 8-2 and the sintering device 8-3 by a high-temperature sintering process, into the support that is consolidated with the glass substrate.

FIG. 5 and FIG. 6 show a tempered glass production line. In the present embodiment, the structure is basically the same as that of Figure 1, except that the side surface of the first conveyor 9 is provided with a second conveyor 10, such as a conveying roller bed, the first conveyor 9 is used for conveying a first glass substrate 100, and the second conveyor 10 is used for conveying a second glass substrate 200. The superposing device 3 comprises a rotating shaft 3-1 disposed between the first and second conveyors 9 and 10, and a swing arm 3-2 connected with the rotating shaft 3-1 and inserted under the second glass substrate 200 along a gap of the second conveyor 10, and the swing arm 3-2 is provided with a vacuum suction cup 3-3 or clamping device; and in operation, the vacuum suction cup 3-3 or clamping device captures the second glass substrate 200, turns over the swing arm 3-2 around the rotating shaft 3-1, and places the second glass substrate 200 on the first glass substrate 100 on the first conveyor 9 to complete the superposing.

FIG. 7 and FIG. 8 show a tempered glass production line. In the present embodiment, the structure is basically the same as that of Figure 1, expect that the superposing device 3 comprises a suspended transmission device disposed above the first conveyor 9. The suspended transmission device extends upstream and is connected with the station where the solder placement device 2 is located, the first conveyor 9 is used for conveying a first glass substrate 100, the suspended transmission device is used for conveying a second glass substrate 200, the suspended transmission device comprises a conveying mechanism 3-4, the conveying mechanism 3-4 is provided with a lifting device 3-6 with a vacuum suction cup 3-5 or clamping device, and the lifting device 3-6 is, for example, a screw lifting mechanism or cylinder; and in operation, the lifting device 3-6 descends, the vacuum suction cup 3-5 or clamping device captures and fixes the second glass substrate 200 on the first conveyor 9 in the station where the solder placement device 2 is located, the lifting device 3-6 ascends, the second glass substrate 200 is conveyed to above the first glass substrate 100 to be superposed, and the second glass substrate 200 is placed on the first glass substrate 100 to complete the superposing.

Of course, the superposing device 3 may also be a multi-degree-of-freedom mechanical arm disposed on one side of the first conveyor 9, and the superposing is completed by the mechanical arm.

## Claims

1. A method for manufacturing tempered vacuum glass, **characterized in that** the manufacturing method comprises the following steps:
(1) preparing a metalized layer in a to-be-sealed region on the glass substrate, and tempering or heat-reinforcing the glass substrates;
(2) placing a metal solder on the metalized layer;
(3) preheating and superposing the glass substrates, by one of the following methods:
a. respectively heating the two glass substrates to 60°C to 230°C, disposing the metalized layers of the to-be-sealed regions of the two glass substrates opposite to each other, and superposing the glass substrates such that the metal solder is located between the metalized layers of the to-be-sealed regions; and
b. disposing the metalized layers of the to-be-sealed regions of the two glass substrates opposite to each other, superposing the glass substrates such that the metal solder is located between the metalized layers of the to-be-sealed regions, and integrally heating the two superposed glass substrates to 60°C to 230°C;
(4) continuing heating a tempered glass assembly in a vacuum chamber to keep the tempered glass assembly in the heating temperature range of step (3), and vacuumizing the vacuum chamber to a predetermined vacuum degree; and
(5) hermetically sealing the metalized layers in the vacuum chamber by a metal brazing process to complete the manufacturing process of the vacuum glass, wherein the metal brazing process is adopted to perform local heating on the to-be-sealed region, wherein the heating mode is laser heating, flame heating, current heating, induction heating, microwave heating, radiation heating or convection heating.

2. The method for manufacturing tempered vacuum glass according to claim 1, **characterized in that** when the glass substrate is a coated glass substrate, a film in the to-be-sealed region of the coated glass substrate is removed before the metalized layer is preformed.

3. The method for manufacturing tempered vacuum glass according to claim 1, **characterized in that** in step (1), a step of preparing a support for supporting an inner cavity is further included: firstly, a paste-like glass glaze is printed on predetermined positions on one of the glass substrates to form a dot-like bulge array; and then, the glass glaze is sintered, by a high-temperature sintering process, into the support that is consolidated with the glass substrate.

4. The method for manufacturing tempered vacuum glass according to claim 1, **characterized in that** in step (5), a spacer is disposed between the two glass substrates, so that a gap for exhausting gas is left between the superposed glass substrates; and after the vacuum chamber reaches a predetermined vacuum degree, the spacer is removed.

5. The method for manufacturing tempered vacuum glass according to claim 1, **characterized in that** before step (3), a getter is placed on at least one of the glass substrates, and the getter is activated after step (4) is completed.

## Patentansprüche

1. Verfahren zum Herstellen von getempertem Vakuumglas, **dadurch gekennzeichnet, dass** das Herstellverfahren die folgenden Schritte umfasst:
(1) Vorbereiten einer metallisierten Schicht in einem abzudichtenden Bereich auf dem Glassubstrat und Tempern oder Verstärken der Glassubstrate durch Wärme;
(2) Anordnen eines Metalllots auf der metallisierten Schicht;
(3) Vorwärmen und Überlagern der Glassubstrate durch eines der folgenden Verfahren:
a. jeweils Erwärmen der zwei Glassubstrate auf 60 bis 230 °C, Anordnen der metallisierten Schichten der abzudichtenden Bereiche der zwei Glassubstrate gegenüberliegend und Überlagern der Glassubstrate, so dass das Metalllot zwischen den metallisierten Schichten der abzudichtenden Bereiche angeordnet ist; und
b. Anordnen der metallisierten Schichten der abzudichtenden Bereiche der zwei Glassubstrate gegenüberliegend, Überlagern der Glassubstrate, so dass das Metalllot zwischen den metallisierten Schichten der abzudichtenden Bereiche angeordnet ist und integrales Erwärmen der zwei überlagerten Glassubstrate auf 60 bis 230 °C;
(4) Fortsetzen des Erwärmens einer getemperten Glasanordnung in einer Vakuumkammer, um die getemperte Glasanordnung im Erwärmungstemperaturbereich von Schritt (3) zu halten und Vakuumieren der Vakuumkammer auf einen vorbestimmten Vakuumgrad; und
(5) hermetisches Abdichten der metallisierten Schichten in der Vakuumkammer durch einen Metallhartlötprozess zum Abschließen des Herstellprozesses des Vakuumglases, wobei der Metallhartlötprozess zum Durchführen einer lokalen Erwärmung des abzudichtenden Bereichs angepasst ist, wobei das Erwärmungsverfahren in einer Lasererwärmung, Flammenerwärmung, Stromerwärmung, Induktionserwärmung, Mikrowellenerwärmung, Strahlungserwärmung oder Konvektionserwärmung besteht.

2. Verfahren zum Herstellen von getempertem Vakuumglas nach Anspruch 1, **dadurch gekennzeichnet, dass,** wenn das Glassubstrat ein beschichtetes Glassubstrat ist, ein Film im abzudichtenden Bereich des beschichteten Glassubstrats entfernt wird, bevor die metallisierte Schicht vorgeformt wird.

3. Verfahren zum Herstellen von getempertem Vakuumglas nach Anspruch 1, **dadurch gekennzeichnet, dass** in Schritt (1) ein Schritt zum Vorbereiten eines Trägers zum Tragen eines inneren Hohlraums ferner enthalten ist: wobei zunächst eine pastenartige Glasur an vorbestimmten Positionen auf einem der Glassubstrate gedruckt wird, um ein punktähnliches Wölbungsraster zu bilden; und anschließend die Glasglasur durch einen Hochtemperatur-Sinterprozess in den Träger gesintert wird, der mit dem Glassubstrat verbunden ist.

4. Verfahren zum Herstellen von getempertem Vakuumglas nach Anspruch 1, **dadurch gekennzeichnet, dass** in Schritt (5) eine Distanz zwischen den zwei Glassubstraten angeordnet ist, so dass ein Abstand zum Entweichen von Gas zwischen den überlagerten Glassubstraten gelassen wird; und nachdem die Vakuumkammer einen vorbestimmten Vakuumgrad erreicht, die Distanz entfernt wird.

5. Verfahren zum Herstellen von getempertem Vakuumglas nach Anspruch 1, **dadurch gekennzeichnet, dass** vor Schritt (3) ein Getter auf wenigstens einem der Glassubstrate angeordnet wird und der Getter aktiviert wird, nachdem der Schritt (4) abgeschlossen ist.

## Revendications

1. Procédé de fabrication de verre à vide trempé, **caractérisé en ce que** le procédé de fabrication comprend les étapes suivantes :
(1) préparation d'une couche métallisée dans une région destinée à être scellée sur le substrat en verre, et trempe ou renforcement par la chaleur des substrats en verre ;
(2) placement d'une brasure métallique sur la couche métallisée ;
(3) préchauffage et superposition des substrats en verre, par l'un des procédés suivants :
a. chauffage respectif des deux substrats en verre jusqu'à une température de 60 °C à 230 °C, disposition des couches métallisées des régions destinées à être scellées des deux substrats en verre à l'opposé l'une de l'autre, et superposition des substrats en verre de sorte que la brasure métallique se trouve entre les couches métallisées des régions destinées à être scellées ; et
b. disposition des couches métallisées des régions destinées à être scellées des deux substrats en verre à l'opposé l'une de l'autre, superposition des substrats en verre de telle sorte que la brasure métallique se trouve entre les couches métallisées des régions destinées à être scellées, et chauffage intégral des deux substrats en verre superposés à une température de 60 °C à 230 °C ;
(4) poursuite du chauffage d'un assemblage de verre trempé dans une chambre sous vide pour maintenir l'assemblage de verre trempé dans la plage de température de l'étape (3), et mise sous vide de la chambre sous vide à un degré de vide prédéterminé ; et
(5) scellage hermétique des couches métallisées dans la chambre sous vide par une opération de brasage métallique pour achever l'opération de fabrication du verre à vide, l'opération de brasage métallique étant adoptée pour effectuer un chauffage local sur la région destinée à être scellée, le mode de chauffage étant un chauffage au laser, un chauffage à la flamme, un chauffage par résistance, un chauffage par induction, un chauffage par micro-ondes, un chauffage par rayonnement ou un chauffage par convection.

2. Procédé de fabrication de verre à vide trempé selon la revendication 1, **caractérisé en ce que** lorsque le substrat en verre est un substrat en verre revêtu, un film dans la région destinée à être scellée du substrat en verre revêtu est retiré avant que la couche métallisée soit préformée.

3. Procédé de fabrication de verre à vide trempé selon la revendication 1, **caractérisé en ce qu'**à l'étape (1), une étape de préparation d'un support destiné à supporter une cavité interne est en outre incluse : premièrement, une glaçure de verre pâteuse est imprimée sur des positions prédéterminées sur l'un des substrats en verre pour former un réseau de renflements de type points ; puis, la glaçure de verre est frittée, par une opération de frittage à haute température, dans le support qui est consolidé avec le substrat en verre.

4. Procédé de fabrication de verre à vide trempé selon la revendication 1, **caractérisé en ce qu'**à l'étape (5), un espaceur est disposé entre les deux substrats en verre, de sorte qu'un espace destiner à faire s'échapper du gaz est laissé entre les deux substrats en verre superposés ; et après que la chambre sous vide a atteint un degré de vide prédéterminé, l'espaceur est retiré.

5. Procédé de fabrication de verre à vide trempé selon la revendication 1, **caractérisé en ce qu'**avant l'étape (3), un getter est placé sur l'un au moins des substrats en verre, et le getter est activé après que l'étape (4) est terminée.
